# EUROPÄISCHE PATENTSCHRIFT

(11) **EP 2 904 673 B1**
(45) Veröffentlichungstag und Bekanntmachung des Hinweises auf die Patenterteilung: **16.01.2019**
(21) Anmeldenummer: 13752643.0
(22) Anmeldetag: 26.08.2013
(51) Int. Cl.: H02G 3/16

(54) **VENTILATOR MIT EINER ELEKTRISCHEN ANSCHLUSSEINRICHTUNG**
VENTILATOR HAVING AN ELECTRICAL CONNECTION DEVICE
VENTILATEUR DOTÉ D'UN DISPOSITIF DE RACCORDEMENT ÉLECTRIQUE

(30) Priorität: 05.10.2012 DE 102012109478
(43) Veröffentlichungstag der Anmeldung: 12.08.2015
(73) Patentinhaber: EBM-Papst Mulfingen GmbH&CO. KG, 74673 Mulfingen (DE)
(72) Erfinder: SAUER, Thomas, 97980 Bad Mergentheim (DE); BEST, Dieter, 74653 Ingelfingen (DE); BECK, Sven, 74238 Krautheim (DE); MASCHKE, Matthias, 74635 Kupferzell (DE); NADIG, Stephan, 74639 Zweiflingen-Pfahlbach (DE)
(74) Vertreter: Staeger & Sperling Partnerschaftsgesellschaft mbB
(86) Internationale Anmeldenummer: PCT/EP2013/067614
(87) Internationale Veröffentlichungsnummer: WO 2014/053274

(56) Entgegenhaltungen:
- EP-A1- 2 477 291
- EP-A2- 1 646 118
- DE-A1- 4 412 870
- DE-B- 1 207 997
- US-A- 4 740 167
- US-A- 5 763 827

## Beschreibung

Die vorliegende Erfindung betrifft gemäß dem Oberbegriff des Anspruchs 1 einen Ventilator mit einem elektrischen Ventilatormotor und einer elektrischen Anschlusseinrichtung zum Verbinden von zu dem Motor führenden elektrischen Motorleitungen mit äußeren elektrischen Anschlussleitungen, wobei die Anschlusseinrichtung einen an einem Geräteteil des Ventilators befestigten und elektrische Kontaktelemente enthaltenden Klemmenkasten aufweist.

Bei aus dem Stand der Technik gemäß dem Oberbegriff des Anspruchs 1 bekannten Ventilatoren ist in aller Regel ein Klemmenkasten an einem Ventilatorteil, wie beispielsweise an einem zur Halterung des Ventilatormotors mit seinem Ventilatorrad vorgesehenen Wandring oder an einem so genannten Diffusor oder an einem sonstigen Gehäuse- oder Geräteteil, befestigt, wobei alle zu verbindenden Leitungen über Durchführungen in den Klemmenkasten eingeführt und dort elektrisch angeklemmt sind. Der Ventilator muss, insbesondere in einem Störungs- oder Reparaturfall, sicher von der Netz-Versorgungsspannung getrennt werden. Dazu war bisher ein Aus-Schalter erforderlich, um die Netzspannung von den Klemmen abschalten zu können. Es musste dann der Klemmenkasten geöffnet werden, und die Leitungsverbindungen mussten dann manuell abgeklemmt werden. Damit war folglich ein großer Aufwand verbunden.

Die DE 44 12 870 A1 offenbart .eine elektrische Anschlusseinrichtung eines Kühl- und/oder Gefriergerätes, bestehend aus einer Aufsteckeinheit, die auf die auf der Außenseite eines eine Motorkompressoreinheit kapselnden Gehäuses angeordneten Anschlussstifte innerhalb eines mit dem Gehäuse verbundenen, nach außen hin offenen Kastens aufsteckbar ist. Dabei ist die Aufsteckeinheit mit Kontakten zum Anschluss der Stromversorgung des Motors und anderer elektrisch anzuschließender Komponenten versehen ist. Die Anschlusseinrichtung besteht weiter aus einem auf den Kasten aufsetzbaren Verschlussdeckel. Die Aufsteckeinheit besteht gemäß der DE 44 12 870 A1 aus einem Adaptergehäuse, das auf seiner den die Anschlussstifte aufnehmenden Buchsen gegenüberliegenden Seite mit Steckkontakten und Halterungen für jeweils unterschiedliche Konturen aufweisende ein- oder mehrpolige Stecker versehen ist. Die Halterungen der Stecker sind derart angepasst, dass jeder Stecker nur in die für diesen vorgesehene Halterung einsetzbar und mit den dieser zugeordneten Steckkontakten kuppelbar ist. Gemäß der Beschreibungseinleitung der DE 44 12 870 A1 benötigen moderne Kühl- und Gefriergeräte neben dem elektrischen Anschluss der Beleuchtung und Ventilatoren weitere elektrische Anschlüsse für die Gerätesteuerungen. Bei der in der DE 44 12 870 A1 offenbarten Anschlusseinrichtung sind gemäß der DE 44 12 870 A1 sämtliche elektrischen Anschlüsse des Kühl- und/oder Gefrieraggregates in dem Adaptergehäuse vereinigt, das somit nicht nur dem Anschluss des Netzkabels und der Stromversorgung des Motors des Kompressors dient, sondern darüber hinaus die zentrale Versorgungseinheit sämtlicher elektrischer Verbraucher der Geräte ist.

Der vorliegenden Erfindung liegt die Aufgabe zu Grunde, einen Ventilator mit einer Anschlusseinrichtung bereit zu stellen, wobei Wartungs- und Reparaturarbeiten unter Aufrechterhaltung der geforderten Sicherheit einfacher, schneller und mit insgesamt reduziertem Aufwand durchgeführt werden können.

Erfindungsgemäß wird dies durch die Merkmale des unabhängigen Anspruchs 1 erreicht. Vorteilhafte Ausgestaltungsmerkmale der Erfindung sind in den abhängigen Ansprüchen und der anschließenden Beschreibung enthalten.

Erfindungsgemäß ist demnach vorgesehen, dass die Anschlusseinrichtung ein zusätzliches Anschlussteil aufweist, an dem die Motorleitungen angeschlossen sind, wobei der Klemmenkasten mit dem zusätzlichen Anschlussteil über elektrische Steckverbindungen lösbar, und somit trennbar, verbunden ist. Zudem ist erfindungsgemäß der Klemmenkasten über äußere Verschraubungen lösbar an dem Geräteteil befestigt, wobei der Klemmenkasten einen Aus-Schalter zum Abschalten einer äußeren Versorgungsspannung aufweist. Dabei ist erfindungsgemäß der Aus-Schalter als Drehschalter ausgebildet und weist einen hebelartigen Schaltknebel derart auf, dass zumindest eine der äußeren Verschraubungen in einer Einschaltstellung überdeckt und in einer Ausschaltstellung zum Lösen zugänglich ist oder der Aus-Schalter ist derart als Schiebeschalter ausgebildet, dass zumindest eine der äußeren Verschraubungen in einer Einschaltstellung überdeckt und in einer Ausschaltstellung zum Lösen zugänglich ist. Hierbei ist in bevorzugter Ausgestaltung das Anschlussteil in einem von einem Boden des Klemmenkastens überdeckten Bereich des Geräteteils lösbar befestigt. Das Anschlussteil und der Boden des Klemmenkastens können hierbei mit Vorteil im Wesentlichen kongruent mit gleichartiger, insbesondere rechteckiger Flächenform ausgebildet sein. Das Anschlussteil weist in Richtung des Klemmenkastens nach oben gerichtete Steckverbinderteile auf, während der Klemmenkasten im Bereich seines Bodens korrespondierende, in Richtung des Anschlussteils nach unten weisende Steckverbinderteile aufweist. Bevorzugt weisen hierbei die Steckverbinderteile des Klemmenkastens eine elektrische Berührungsschutz-Isolation auf.

Der eigentliche Klemmenkasten kann nach Lösen seiner mechanischen Halteverbindung von dem Geräteteil und somit auch von dem an dem Geräteteil gehalterten Anschlussteil getrennt werden, und zwar unter gleichzeitiger Trennung der elektrischen Steckverbindungen. Der mechanisch gelöste Klemmenkasten bleibt mit den äußeren Anschlussleitungen verbunden. Durch dieses einfache Lösen und Trennen des Klemmenkastens kann somit der Ventilatormotor problemlos instandgesetzt oder gänzlich zusammen mit seinem vorverdrahteten Anschlussteil ausgetauscht werden. Nach Reparatur oder Austausch braucht nur noch das jeweilige Anschlussteil wieder am Gerät fixiert zu werden. Anschließend wird der Klemmenkasten wieder aufgesetzt und ebenfalls am Gerät befestigt. Dabei werden die elektrischen Steckverbindungen wieder automatisch verbunden. Somit sind vorteilhafterweise keinerlei Klemmarbeiten mehr erforderlich, und der Klemmenkasten braucht auch gar nicht geöffnet zu werden.

Erfindungsgemäß weist der Klemmenkasten zudem den Aus-Schalter auf, um schon vor dem Trennen der erfindungsgemäßen Steckverbindungen die Netzspannung abschalten zu können.

Anhand eines bevorzugten, in den Zeichnungen veranschaulichten Ausführungsbeispiels soll die Erfindung im Folgenden genauer erläutert werden.
Es zeigen:
- Fig. 1: eine perspektivische Ansicht auf den Bereich einer erfindungsgemäßen Anschlusseinrichtung im montierten Zustand,
- Fig. 2: eine Ansicht wie in Fig. 1, jedoch in einem Zustand mit gelöstem Klemmenkasten,
- Fig. 3: eine Ansicht im montierten Zustand mit geöffnetem Klemmenkasten,
- Fig. 4: eine gesonderte Perspektivansicht nur des Klemmenkastens,
- Fig. 5: einen gegenüber Fig. 1 vergrößerten Querschnitt in einer durch eine Linie V-V angedeuteten Schnittebene,
- Fig. 6: eine gesonderte Perspektivansicht des zusätzlichen Anschlussteils auf dessen Oberseite,
- Fig. 7: eine weitere Perspektivansicht des Anschlussteils auf dessen Unterseite,
- Fig. 8: eine Perspektivansicht in den geöffneten Klemmenkasten unter Weglassung von inneren Bestandteilen und
- Fig. 9: eine Perspektivansicht eines Isolierteils für die Steckverbinderteile des Klemmenkastens.

In den verschiedenen Figuren der Zeichnung sind gleiche Teile stets mit den gleichen Bezugszeichen versehen.

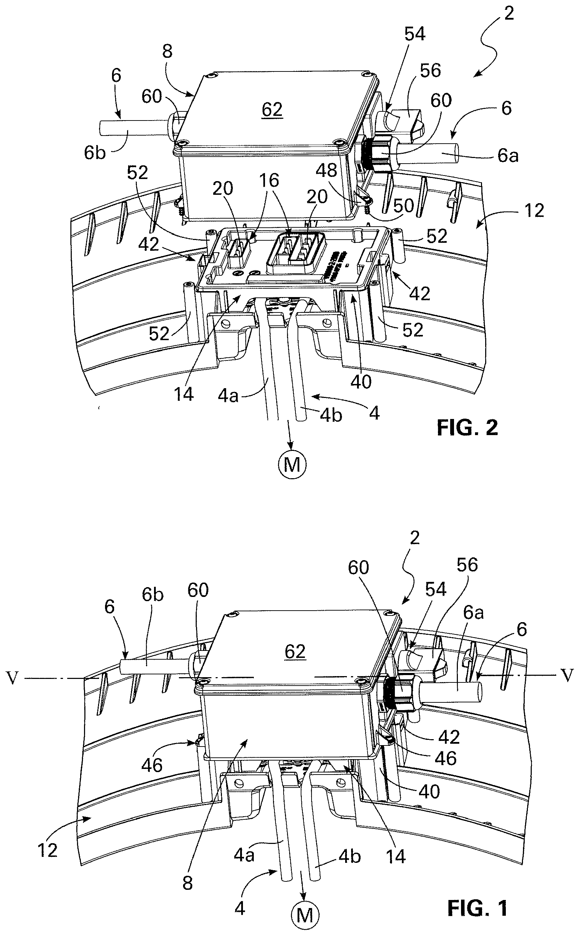

In der Zeichnung ist von einem erfindungsgemäßen Ventilator jeweils nur der Bereich einer elektrischen Anschlusseinrichtung 2 dargestellt. Der Ventilator kann als Axial-, Radial- oder Diagonalventilator ausgebildet sein, wobei ein lediglich in Fig. 1 und 2 jeweils nur schematisch eingezeichneter Elektromotor M ein nicht dargestelltes Ventilatorrad rotierend antreibt.

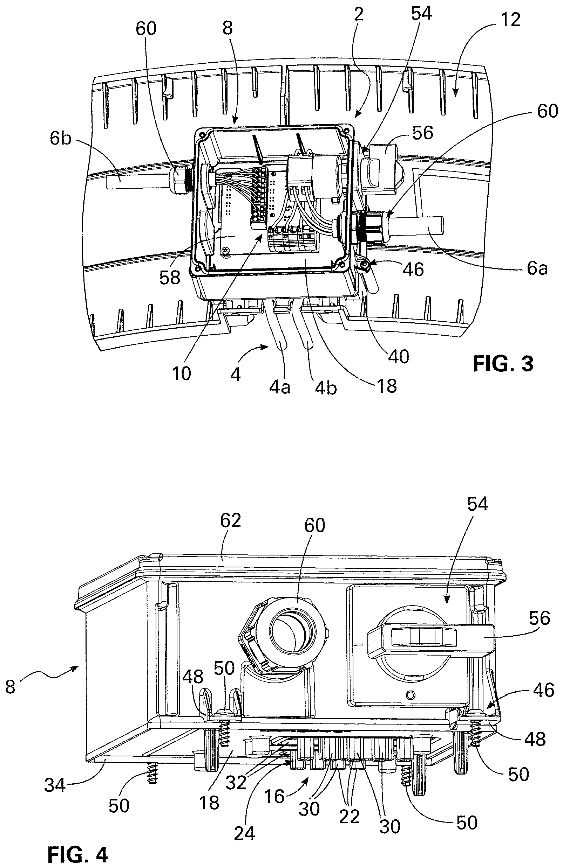

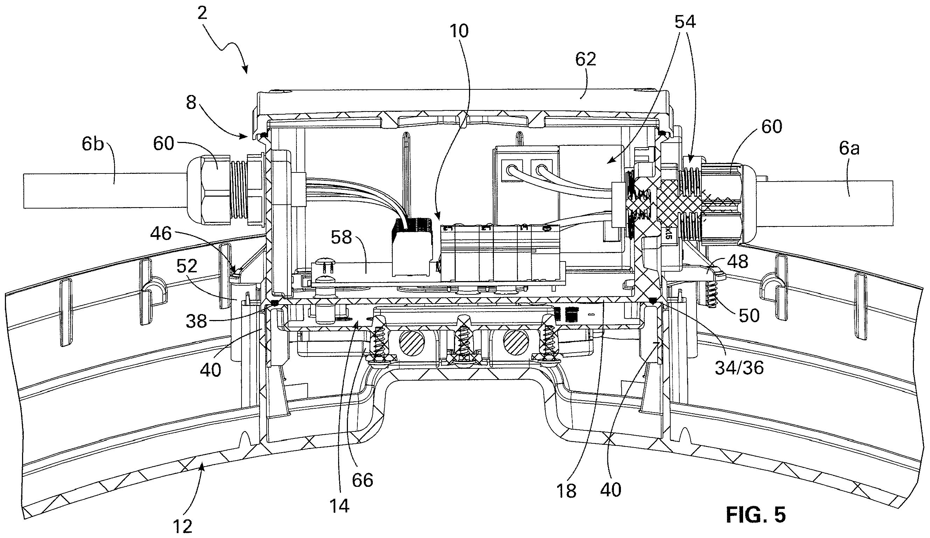

Die Anschlusseinrichtung 2 dient zum Verbinden von zu dem Motor M führenden elektrischen Motorleitungen 4 mit äußeren elektrischen Anschlussleitungen 6. Dazu weist die Anschlusseinrichtung 2 einen Klemmenkasten 8 auf, der elektrische Kontaktelemente 10 enthält (siehe Fig. 3 und 5), und der an einem Geräteteil 12 befestigt ist. Bei dem dargestellten, bevorzugten Ausführungsbeispiel handelt es sich bei dem Geräteteil 12 um einen so genannten Diffusor zur Beeinflussung der Strömungseigenschaften des Ventilators. Das Geräteteil 12 kann aber auch von einem beliebigen anderen Teil gebildet sein, beispielsweise einem zur mechanischen Halterung des Motors M mit seinem Ventilatorrad vorgesehenen Wandring oder einem sonstigen Gehäuseteil.

Bei dem dargestellten Beispiel sind als Motorleitungen 4 einerseits ein Spannungs-Versorgungskabel 4a und andererseits ein Steuerkabel 4b vorgesehen. Die äußeren Anschlussleitungen 6 bestehen beispielsweise aus einem Netzkabel 6a und einem Steuerkabel 6b.

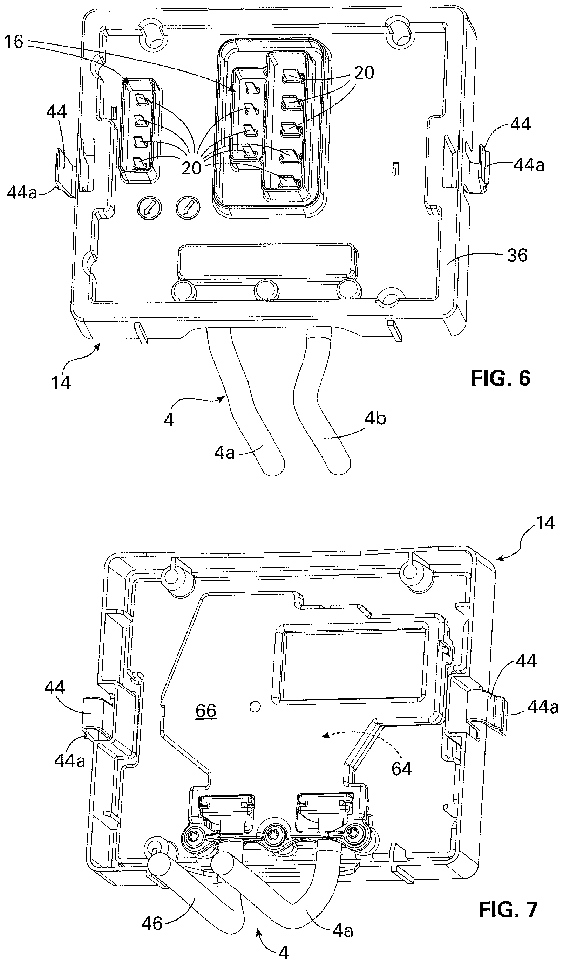

Erfindungsgemäß weist die Anschlusseinrichtung 2 ein zusätzliches Anschlussteil 14 auf, an dem die Motorleitungen 4 fest, das heißt vorgefertigt angeschlossen sind, wobei bestimmte Kontaktelemente 10 des Klemmenkastens 8 mit dem zusätzlichen Anschlussteil 14 über elektrische Steckverbindungen 16 lösbar, trennbar verbunden sind. Das bevorzugt plattenartige Anschlussteil 14 ist in Fig. 6 und 7 gesondert dargestellt. Zu den Steckverbindungen 16 wird insbesondere auf die Figuren 2, 4 und 6 verwiesen.

In vorteilhafter Ausgestaltung ist das Anschlussteil 14 in einem von einem Boden 18 des Klemmenkastens 8 überdeckten Bereich des Geräteteils 12 lösbar befestigt. Dabei sind das Anschlussteil 12 - siehe Fig. 6 und 7 - und der Boden 18 des Klemmenkastens 8 bevorzugt mit gleichartiger, insbesondere rechteckiger Flächenform im Wesentlichen kongruent ausgebildet und im montierten Zustand parallel zueinander angeordnet. Der Klemmenkasten 8 kann hierdurch mit seinem Boden 18 passend auf das Anschlussteil 14 aufgesetzt werden. Das Anschlussteil 14 weist Steckverbinderteile 20 auf, siehe Fig. 2 und 6, die in Richtung des Klemmenkastens 8 nach oben weisen, während der Klemmenkasten 8 im Bereich seines Bodens 18 korrespondierende Steckverbinderteile 22 aufweist, siehe Fig. 4, die in Richtung des Anschlussteils 14 nach unten weisen. Die Steckverbinderteile 20, 22 sind so angeordnet, dass beim mechanischen Aufsetzen des Klemmenkastens 8 auf den Bereich des Anschlussteils 14 die Steckverbindungen 16 selbsttätig zusammengesteckt und dadurch elektrisch verbunden werden.

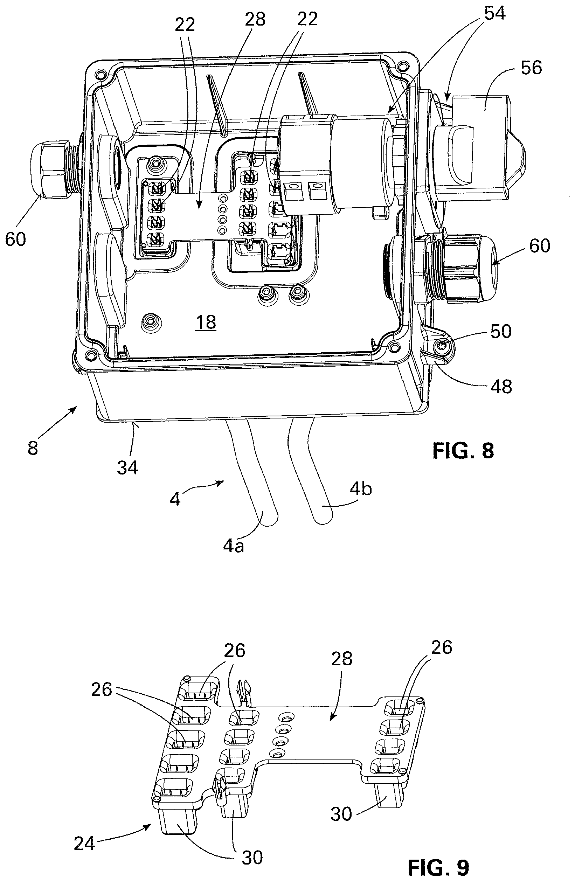

In weiterer vorteilhafter Ausgestaltung weisen die Steckverbinderteile 22 des Klemmenkastens 8 eine elektrische Berührungsschutz-Isolation 24 auf. Dazu wird auf Fig. 4 und 9 verwiesen. Demnach sitzen die Steckverbinderteile 22 in Aufnahmekammern 26 eines innerhalb des Klemmenkastens 8 angeordneten Isolierteils 28. Das Isolierteil 28 ist in Fig. 9 gesondert dargestellt, wobei die Aufnahmekammern 26 noch nicht mit den Steckverbinderteilen 22 bestückt sind. Wie sich aus Fig. 4 ergibt, durchgreift das Isolierteil 28 mit die Steckverbinderteile 22 hülsenartig umschließenden Isolierabschnitten 30 mindestens eine Bodenöffnung 32 des Klemmenkastens 8 nach unten in Richtung des Anschlussteils 14. Indem die Steckverbinderteile 22 vollständig von den Isolierabschnitten 30 umschlossen sind, wird ein sicherer Schutz gegen Berührungen spannungsführender Bestandteile gewährleistet.

Es ist weiterhin vorteilhaft, wenn der das zusätzliche Anschlussteil 14 überdeckende Klemmenkasten 8 randlich umfangsgemäß abgedichtet mit dem Anschlussteil 14 verbunden ist. Dazu können der Klemmenkasten 8 im Außenbereich seines Bodens 18 und das Anschlussteil 14 im äußeren Randbereich umlaufende Dichtränder 34, 36 aufweisen, siehe insbesondere Fig. 4 und 6. Zusätzlich kann eine elastische Dichtung 38 (nur in Fig. 5 dargestellt) im Bereich der Dichtränder 34, 36 vorgesehen sein. Durch diese vorteilhafte Ausgestaltung sind die Steckverbindungen 16 von den Dichträndern 34, 36 umschlossen und dadurch gegen Nässe und dergleichen geschützt. Dadurch können einfache, selbst nicht wasserdichte Steckverbindungen verwendet werden.

Wie sich weiter aus Fig. 1, 2, 3 und 5 ergibt, sitzt das Anschlussteil 14 formschlüssig in einer Aufnahme 40 des Geräteteils 12. Hierbei ist das Anschlussteil 14 bevorzugt mit dem Geräteteil 12 verrastet und dadurch gegen Lösen fixiert. In der dargestellten, bevorzugten Ausführung sind hierzu zwei randliche, diametral gegenüberliegende Verrastungen 42 vorgesehen. Wie sich insbesondere aus Fig. 6 und 7 ergibt, weist dazu das Anschlussteil 14 in zwei einander gegenüberliegenden Seitenrandbereichen jeweils ein U-förmiges, bügelartiges Rastelement 44 auf, wobei diese Rastelemente 44 seitlich federelastisch beweglich sind und jeweils in eine Rastausnehmung im Bereich der Aufnahme 40 des Geräteteils 12 mit einem nasenartigen Rastansatz 44a rastend eingreifen. Die Verrastungen 42 sind auch lösbar, indem die Rastelemente 44 manuell oder mit einem geeigneten Werkzeug nach innen bewegt werden.

Der Klemmenkasten 8 ist erfindungsgemäß in seinem auf das Anschlussteil 14 aufgesetzten Zustand über äußere, das heißt von außen ohne Öffnung des Klemmenkastens 8 zugängliche Verschraubungen 46 lösbar an dem Geräteteil 12 befestigt. Wie sich insbesondere aus Fig. 2 ergibt, weist dazu der Klemmenkasten 8 in an den Boden 18 angrenzenden Seitenbereichen seitlich abstehende Halteansätze 48 mit Löchern für Befestigungsschrauben 50 auf, wobei die Befestigungsschrauben 50 die Löcher der Halteansätze 48 durchgreifen und in bevorzugt stiftartige Ansätze 52 des Geräteteils 12 neben der Aufnahme 40 eingreifen.

Erfindungsgemäß weist der Klemmenkasten 8 zudem einen Aus-Schalter 54 zum Abschalten einer äußeren Versorgungsspannung, insbesondere der Netzspannung, auf. Hierbei handelt es sich mit Vorteil um einen dreipoligen Schalter, der alle Leitungen der Netzversorgung unterbricht, so dass im ausgeschalteten Zustand keine Spannung mehr an den Kontaktelementen innerhalb des Klemmenkastens 8 und insbesondere keine Spannung an den Steckverbinderelementen 22 vorhanden ist. Gemäß einer dargestellten Ausführungsform der Erfindung ist der Aus-Schalter 54 als Drehschalter ausgebildet, wobei er einen hebelartigen Schaltknebel 56 derart aufweist, dass zumindest eine der äußeren Verschraubungen 46 in einer Einschaltstellung gegen Ansetzen eines Schraubwerkzeuges überdeckt und nur in einer Ausschaltstellung zum Lösen zugänglich ist. Dazu wird insbesondere auf Fig. 4 verwiesen, wonach in der dargestellten Einschaltstellung der hebelartige Schaltknebel 56 die im vorderen rechten Bereich dargestellte Verschraubung 46 von oben überdeckt. Dadurch kann die Verschraubung 46 in der Einschaltstellung nicht gelöst werden, vielmehr muss erst der Aus-Schalter 54 in seine Ausschaltstellung gedreht werden.

Dadurch schwenkt der Schaltknebel 56 nach oben und gibt die Verschraubung 46 für das Schraubwerkzeug frei.

Eine gleichartige Funktion wird erreicht, wenn der Aus-Schalter 54 als Schiebeschalter ausgebildet ist.

Wie sich noch aus Fig. 3 ergibt, ist innerhalb des Klemmenkastens 8 eine Leiterplatte 58 angeordnet, auf der einerseits Kontaktelemente 10 zum über den Aus-Schalter 54 mittelbaren Anschluss der äußeren Anschlussleitungen 6 und andererseits die Steckverbinderteile 22, vergleiche Fig. 4 und 8, zur Steckanschluss-Verbindung mit dem zusätzlichen Anschlussteil 14 angeordnet und elektrisch verschaltet sind. In Fig. 8 ist die Leiterplatte 58 nicht dargestellt, um Einsicht auf das mit den Steckverbinderteilen 22 bestückte Isolierteil 28 zu ermöglichen. Im montierten Zustand würde hier die Leiterplatte 58 das Isolierteil 28 überdecken, wobei dann die Steckverbinderteile 22 mit der Leiterplatte 58 verlötet sind.

Es sei noch erwähnt, dass die äußeren Anschlussleitungen 6, das heißt das Netzkabel 6a und das Steuerkabel 6b, jeweils durch eine Kabel-Dichtverschraubung 60 in den Klemmenkasten 8 eingeführt sind. Die Dichtverschraubungen 60 bilden abgedichtete Durchführungen durch Seitenwandungen des Klemmenkastens 8. Bevorzugt sind alle Leitungen 6 innerhalb des Klemmenkastens 8 über Steck-Klemmen elektrisch angeschlossen.

Der Klemmenkasten 8 weist auf seiner von dem Geräteteil 14 wegweisenden Oberseite eine mit einem lösbaren Deckel 62 dicht verschlossene Öffnung auf.

Die Motorleitungen 4, das heißt bevorzugt das Versorgungskabel 4a und das Steuerkabel 4b, sind in einem nach außen abgedichteten Anschlussraum 64 des Anschlussteils 14 mit dessen Steckverbinderteilen 20 elektrisch verbunden. Der Anschlussraum 64 ist in Fig. 7 gestrichelt angedeutet, er wird auf der vom Klemmenkasten 8 wegweisenden Unterseite von einer kappenartigen Abdeckung 66 dicht verschlossen.

Durch die zuvor beschriebene, erfindungsgemäße und bevorzugte Ausgestaltung werden wesentliche Vereinfachungen bei der Herstellung, Montage sowie auch bei Instandsetzungsarbeiten erreicht. Zur Montage wird das erfindungsgemäße Anschlussteil 14 mit den Motorleitungen 4 fertig vorverdrahtet. Zur Montage wird dann das Anschlussteil 14 in die Aufnahme 40 des Geräteteils 12 eingesetzt und verrastet. Nachfolgend braucht nur noch der Klemmenkasten 8 aufgesetzt und über die Verschraubungen 46 befestigt zu werden. Der Anschluss der Anschlussleitungen 6 erfolgt dann anwenderseitig in üblicher Weise, indem der Deckel 62 geöffnet wird, um die durch die Dichtverschraubungen 60 eingeführten Leitungen anschließen zu können. Abschließend wird der Deckel 62 geschlossen.

Soll nun in einem Störungsfall eine Reparatur oder ein Austausch erfolgen, so muss zunächst der Aus-Schalter 54 in seine Ausschaltstellung umgeschaltet werden, um die zugehörige Verschraubung 46 des Klemmenkastens 8 lösen zu können. Nach Lösen der Verschraubungen 46 braucht lediglich der Klemmenkasten 8 abgenommen zu werden. Zur Wieder-Montage braucht nur das Anschlussteil 14 wieder in die Aufnahme 40 eingesetzt und der Klemmenkasten 8 wieder aufgesetzt und befestigt zu werden.

## Patentansprüche

1. Ventilator mit einem elektrischen Ventilatormotor (M) und einer elektrischen Anschlusseinrichtung (2) zum Verbinden von zu dem Motor (M) führenden elektrischen Motorleitungen (4) mit äußeren elektrischen Anschlussleitungen (6), wobei die Anschlusseinrichtung (2) einen an einem Geräteteil (12) des Ventilators befestigten und elektrische Kontaktelemente (10) enthaltenden Klemmenkasten (8) aufweist,
**dadurch gekennzeichnet, dass**
die Anschlusseinrichtung (2) ein zusätzliches Anschlussteil (14) aufweist, an dem die Motorleitungen (4) angeschlossen sind, wobei der Klemmenkasten (8) mit dem zusätzlichen Anschlussteil (14) über elektrische Steckverbindungen (16) lösbar verbunden ist,
der Klemmenkasten (8) über äußere Verschraubungen (46) lösbar an dem Geräteteil (12) befestigt ist, und
der Klemmenkasten (8) einen Aus-Schalter (54) zum Abschalten einer äußeren Versorgungsspannung aufweist, wobei der Aus-Schalter (54) als Drehschalter ausgebildet ist und einen hebelartigen Schaltknebel (56) derart aufweist, dass zumindest eine der äußeren Verschraubungen (46) in einer Einschaltstellung überdeckt und in einer Ausschaltstellung zum Lösen zugänglich ist oder der Aus-Schalter (54) derart als Schiebeschalter ausgebildet ist, dass zumindest eine der äußeren Verschraubungen (46) in einer Einschaltstellung überdeckt und in einer Ausschaltstellung zum Lösen zugänglich ist.

2. Ventilator nach Anspruch 1,
**dadurch gekennzeichnet, dass** das Anschlussteil (14) in einem von einem Boden (18) des Klemmenkastens (8) überdeckten Bereich des Geräteteils (12) lösbar befestigt ist, wobei einerseits das Anschlussteil (14) in Richtung des Klemmenkastens (8) weisende Steckverbinderteile (20) und andererseits der Klemmenkasten (8) im Bereich seines Bodens (18) korrespondierende, in Richtung des Anschlussteils (14) weisende Steckverbinderteile (22) aufweisen.

3. Ventilator nach Anspruch 2,
**dadurch gekennzeichnet, dass** die Steckverbinderteile (22) des Klemmenkastens (8) eine elektrische Berührungsschutz-Isolation (24) aufweisen.

4. Ventilator nach Anspruch 2 oder 3,
**dadurch gekennzeichnet, dass** die Steckverbinderteile (22) des Klemmenkastens (8) in Aufnahmekammern (26) eines innerhalb des Klemmenkastens (8) angeordneten Isolierteils (28) sitzen, wobei das Isolierteil (28) mit die Steckverbinderteile (22) hülsenartig umschließenden Isolierabschnitten (30) eine Bodenöffnung (32) des Klemmenkastens (8) nach unten in Richtung des Anschlussteils (14) durchgreift.

5. Ventilator nach einem der Ansprüche 1 bis 4,
**dadurch gekennzeichnet, dass** der Klemmenkasten (8) randlich umfangsgemäß abgedichtet mit dem Anschlussteil (14) verbunden ist.

6. Ventilator nach einem der Ansprüche 1 bis 5,
**dadurch gekennzeichnet, dass** das Anschlussteil (14) in einer Aufnahme (40) des Geräteteils (12) sitzt und über insbesondere zwei randliche, einander gegenüberliegende Verrastungen (42) lösbar fixiert ist.

7. Ventilator nach einem der Ansprüche 2 bis 6,
**dadurch gekennzeichnet, dass** innerhalb des Klemmenkastens (8) eine Leiterplatte (58) untergebracht ist, auf der einerseits Kontaktelemente (10) zum Anschluss der äußeren Anschlussleitungen (6) und anderseits die Steckverbinderteile (22) zur Steckanschluss-Verbindung mit dem zusätzlichen Anschlussteil (14) angeordnet und elektrisch verschaltet sind.

8. Ventilator nach einem der vorhergehenden Ansprüche,
**dadurch gekennzeichnet, dass** als äußere Anschlussleitungen (6) ein Netzkabel (6a) und ein Steuerkabel (6b) jeweils durch eine Kabel-Dichtverschraubung (60) in den Klemmenkasten (8) eingeführt sind.

9. Ventilator nach einem der vorhergehenden Ansprüche,
**dadurch gekennzeichnet, dass** der Klemmenkasten (8) auf seiner von dem Geräteteil (12) wegweisenden Oberseite eine mit einem lösbaren Deckel (62) dicht verschlossene Öffnung aufweist.

10. Ventilator nach einem der Ansprüche 2 bis 9,
**dadurch gekennzeichnet, dass** die Motorleitungen (4), insbesondere eine Versorgungskabel (4a) und ein Steuerkabel (4b), in einem nach außen abgedichteten Anschlussraum (64) des Anschlussteils (14) mit dessen Steckverbinderteilen (20) verbunden sind.

## Claims

1. A ventilator comprising an electric ventilator motor (M) and an electrical connection device (2) for connecting electric motor lines (4), which lead to the motor (M), to external electrical connection lines (6), the connection device (2) comprising a terminal box (8) which is fixed to an appliance part (12) of the ventilator and which contains electrical contact (10) elements,
**characterized in that**
the connection device (2) comprises an additional connection part (14) to which the motor lines (4) are connected, the terminal box (8) being releasably connected to the additional connection part (14) via electrical plug-in connections (16),
the terminal box (8) is releasably fixed to the appliance part (12) via external screw connections (46), and
the terminal box (8) comprises an off switch (54) for switching off an external power supply, the off switch (54) being in the form of a rotary switch and comprising a lever-like switching knob (56), in such a way that at least one of the external screw connections (46) is covered in an on position and accessible for release in an off position, or the off switch (54) being configured as a sliding switch, in such a way that at least one of the external screw connections (46) is covered in an on position and accessible for release in an off position.

2. The ventilator according to claim 1, **characterized in that** the connection part (14) is releasably fixed in a region of the appliance part (12) covered by a base (18) of the terminal box (8), the connection part (14) on the one hand comprising plug-in connector parts (20) directed towards the terminal box (8), and on the other hand, in the region of the base (18) thereof, the terminal box (8) comprising corresponding plug-in connector parts (22) directed towards the connection part (14).

3. The ventilator according to claim 2, **characterized in that** the plug-in connector parts (22) of the terminal box (8) comprise electrical contact protection insulation (24).

4. The ventilator according to claim 2 or 3, **characterized in that** the plug-in connector parts (22) of the terminal box (8) are positioned in receiving chambers (26) of an insulation part (28) arranged inside the terminal box (8), the insulation part (28) with insulation portions (30) which enclose the plug-in connector parts (22) in a sleeve-like manner penetrating a base opening (32) of the terminal box (8) downwards towards the connection part (14).

5. The ventilator according to one of the claims 1 to 4, **characterized in that** the terminal box (8) is connected, in a manner peripherally sealed at the edge, to the connection part (14).

6. The ventilator according to one of the claims 1 to 5, **characterized in that** the connection part (14) is positioned in a recess (40) of the appliance part (12) and releasably fixed via in particular two mutually opposed edge latch connections (42).

7. The ventilator according to one of the claims 2 to 6, **characterized in that** a circuit board (58) is accommodated inside the terminal box (8), on which circuit board (58), on the one hand, contact elements (10) for connecting the external connection lines (6) and, on the other hand, the plug-in connector parts (22) for the plug-in connection to the additional connection part (14) are arranged and electrically wired.

8. The ventilator according to one of the preceding claims, **characterized in that**, as external connection lines (6), a mains cable (6a) and a control cable (6b) are each introduced into the terminal box (8) by way of a cable sealing screw connection (60).

9. The ventilator according to one of the preceding claims, **characterized in that** the terminal box (8) comprises an opening, which can be tightly sealed using a releasable lid (62), on the upper face thereof facing away from the appliance part (12).

10. The ventilator according to one of the claims 2 to 9, **characterized in that** the motor lines (4), in particular a supply cable (4a) and a control cable (4b), are connected to the plug-in connector parts (20) of the connection part (14) in an outwardly sealed connection space (64) of said connection part (14).

## Revendications

1. Ventilateur avec un moteur de ventilateur électrique (M) et un dispositif de raccordement électrique (2) pour connecter des câbles moteur électriques (4) conduisant au moteur (M) à des câbles de raccordement électriques extérieurs (6), dans lequel le dispositif de raccordement (2) présente une boîte à bornes (8) fixée à un élément d'appareil (12) du ventilateur et contenant des éléments de contact électriques (10),
**caractérisé en ce que**
le dispositif de raccordement (2) présente un élément de raccordement supplémentaire (14), au niveau duquel les câbles moteur (4) sont raccordés, dans lequel la boîte à bornes (8) est connectée de manière libérable à l'élément de raccordement supplémentaire (14) par le biais de connexions enfichables électriques (16),
la boîte à bornes (8) est fixée de manière libérable à l'élément d'appareil (12) par le biais de vissages extérieurs (46), et
la boîte à bornes (8) présente un interrupteur d'arrêt (54) pour couper une tension d'alimentation extérieure, dans lequel l'interrupteur d'arrêt (54) est réalisé en tant qu'interrupteur rotatif et présente un bouton de commutation de type levier (56) de sorte qu'au moins un des vissages extérieurs (46) est recouvert dans une position de mise en circuit et est accessible pour la libération dans une position de mise hors circuit ou l'interrupteur d'arrêt (54) est réalisé en tant qu'interrupteur coulissant de sorte qu'au moins un des vissages extérieurs (46) est recouvert dans une position de mise en circuit et est accessible pour la libération dans une position de mise hors circuit.

2. Ventilateur selon la revendication 1,
**caractérisé en ce que** l'élément de raccordement (14) est fixé de manière libérable dans une zone de l'élément d'appareil (12) recouverte par un fond (18) de la boîte à bornes (8), dans lequel d'un côté l'élément de raccordement (14) présente des éléments de connecteur enfichable (20) dirigés en direction de la boîte à bornes (8) et d'un autre côté la boîte à bornes (8) présente des éléments de connecteur enfichable (22) correspondants dans la zone de son fond (18), dirigés en direction de l'élément de raccordement (14).

3. Ventilateur selon la revendication 2,
**caractérisé en ce que** les éléments de connecteur enfichable (22) de la boîte à bornes (8) présentent une isolation avec protection de contact électrique (24).

4. Ventilateur selon la revendication 2 ou 3,
**caractérisé en ce que** les éléments de connecteur enfichable (22) de la boîte à bornes (8) sont montés dans des chambres de réception (26) d'un élément d'isolation (28) agencé à l'intérieur de la boîte à bornes (8), dans lequel l'élément d'isolation (28) avec des sections d'isolation (30) entourant à la manière d'une douille les éléments de connecteur enfichable (22) traverse une ouverture de fond (32) de la boîte à bornes (8) vers le bas en direction de l'élément de raccordement (14).

5. Ventilateur selon l'une quelconque des revendications 1 à 4,
**caractérisé en ce que** la boîte à bornes (8) est connectée à l'élément de raccordement (14) de manière étanche circonférentiellement sur les bords.

6. Ventilateur selon l'une quelconque des revendications 1 à 5,
**caractérisé en ce que** l'élément de raccordement (14) est monté dans un logement (40) de l'élément d'appareil (12) et est fixé de manière libérable par le biais en particulier de deux crantages (42) opposés l'un à l'autre, marginaux.

7. Ventilateur selon l'une quelconque des revendications 2 à 6,
**caractérisé en ce qu'**un circuit imprimé (58) est logé à l'intérieur de la boîte à bornes (8), sur lequel d'un côté des éléments de contact (10) pour le raccordement des câbles de raccordement extérieurs (6) et de l'autre côté les éléments de connecteur enfichable (22) pour la connexion par raccord enfichable avec l'élément de raccordement (14) sont agencés et câblés électriquement.

8. Ventilateur selon l'une quelconque des revendications précédentes,
**caractérisé en ce qu'**un câble de réseau (6a) et un câble de commande (6b) sont introduits en tant que câbles de raccordement (6) respectivement par un vissage d'étanchéité de câble (60) dans la boîte à bornes (8).

9. Ventilateur selon l'une quelconque des revendications précédentes,
**caractérisé en ce que** la boîte à bornes (8) présente sur sa face supérieure s'éloignant de l'élément d'appareil (12), une ouverture fermée de manière étanche avec un couvercle libérable (62).

10. Ventilateur selon l'une quelconque des revendications 2 à 9,
**caractérisé en ce que** les câbles moteur (4), en particulier un câble d'alimentation (4a) et un câble de commande (4b), sont connectés dans un espace de raccordement (64) rendu étanche vers l'extérieur de l'élément de raccordement (14) avec ses éléments de connecteur enfichable (20).
